# EUROPEAN PATENT SPECIFICATION

(11) **EP 1 673 920 B1**
(45) Date of publication and mention of the grant of the patent: **01.08.2007**
(21) Application number: 04791145.8
(22) Date of filing: 04.10.2004
(51) Int. Cl.: H04L 29/06

(54) **METHOD AND APPARATUS FOR TRANSLATING DATA PACKETS FROM ONE NETWORK PROTOCOL TO ANOTHER**
VERFAHREN UND VORRICHTUNG ZUM ÜBERSETZEN VON DATENPAKETEN AUS EINEM NETZWERKPROTOKOLL IN EIN ANDERES
PROCEDE ET APPAREIL DE TRADUCTION DE PAQUETS DE DONNEES D'UN PROTOCOLE DE RESEAU EN UN AUTRE

(30) Priority: 14.10.2003 US 605621
(43) Date of publication of application: 28.06.2006
(73) Proprietor: International Business Machines Corporation, Armonk, NY 10504 (US)
(72) Inventor: ANDERSON, Richard, Eugene, Jericho, VT 05465 (US); FAUCHER, Marc, Raymond, South Burlington, VT 05403 (US); GEORGIOU, Christos, John, Scarsdale, NY 10583 (US); NOEL, Francis, Jr., Durham, NC 27707 (US)
(74) Representative: Williams, Julian David
(86) International application number: PCT/EP2004/052433
(87) International publication number: WO 2005/041523

(56) References cited:
- WO-A-01/71524
- WO-A-03/034670
- WO-A-03/067381

## Description

### Technical field

The present invention relates to network communications in general, and, in particular, to a method and apparatus for translating data packets. Still more particularly, the present invention relates to a method and apparatus for translating data packets from one network protocol to another.

### Background, art

In a mixed protocol network environment, a significant amount of processing power of a network router is spent on translating data packet information from one protocol to another. Packet translation is a relatively time-consuming process. For a network storage environment, it is important to perform packet translation in an efficient manner in order to maintain an overall high system performance. An example of a document which describes such translation is WO 03/034670.

Conventionally, there are hardware solutions and software solutions for facilitating the packet translation process. One hardware solution is to construct packet headers with a state machine, but the problem with such solution is that there is no flexibility if network protocols change or migrate. Another hardware solution is to construct packet headers with a general purpose processor (GPP), but the problem with such solution is that long sequences of GPP instructions are required to execute protocol translations.

As for software solutions, information from the header or context block of a packet can be used to construct headers or frames. But the problem with such solution is that there are performance constraints from recalculations needed to be made for each translation.

WO 01/71524 describes a cache memory module for supporting the interconnection of various network protocols.

Consequently, it is desirable to provide an improved method and apparatus for translating data packets between different network protocols.

### Disclosure of the invention

The present invention provides a method as claimed in claim 1, an apparatus as claimed in claim 6, and a computer program product as claimed in claim 11.

### Brief Description of the Drawings

The invention itself, as well as a preferred mode of use, further objects, and advantages thereof, will best be understood by reference to the following detailed description of an illustrative embodiment when read in conjunction with the accompanying drawings, wherein:

Figure **1** is a block diagram of a network environment to which a preferred embodiment of the present invention is applicable;

Figure **2** is a block diagram of an apparatus for translating data packets between different network protocols, in accordance with a preferred embodiment of the present invention;

Figures **3a-3b** are block diagrams of a translation template cache, in accordance with a preferred embodiment of the present invention;

Figure **4** is a block diagram of a translation template for facilitating the translation of a received data packet to a Fibre Channel protocol, in accordance with a preferred embodiment of the present invention; and

Figure **5** is a high-level logic flow diagram of a method for translating data packets from one protocol to another by using the apparatus from Figure 2, in accordance with a preferred embodiment of the present invention.

### Best Mode for Carrying Out the Invention

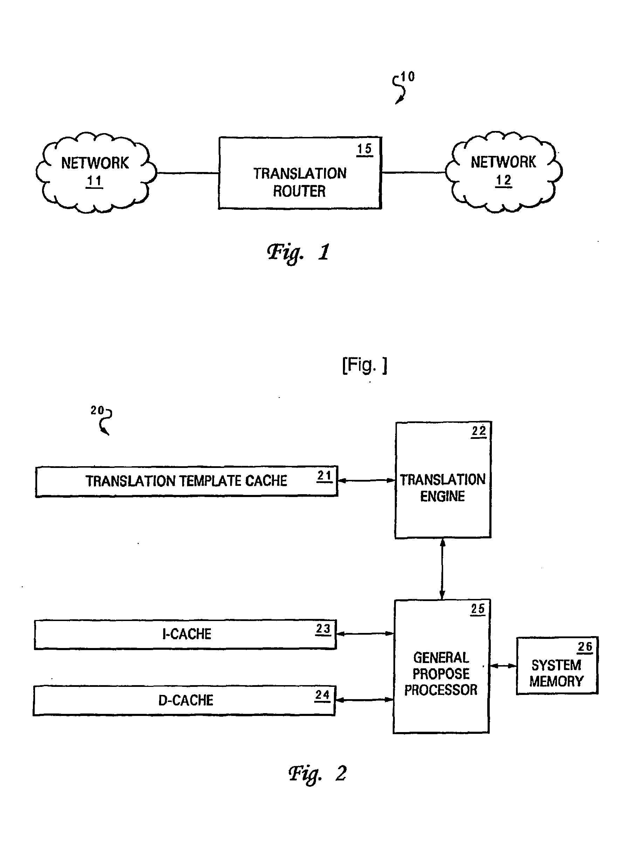

Referring now to the drawings and in particular to Figure **1,** there is depicted a block diagram of a network environment to which a preferred embodiment of the present invention is applicable. As shown, a network environment **10** includes a network **11** and a network **12.** Each of network **11** and network **12** may have its own separate network protocol. For example, network **11** can be Ethernet while network **12** can be Fibre Channel, or network **11** can be Fibre Channel while network **12** can be InfiniBand. All communications between network **11** and network **12** are handled by a translation router **15.** Translation router **15** is preferably a multi-protocol router. As a multi-protocol router, each port of translation router **15** is associated with a specific network protocol. For example, if translation router **15** has three ports, port 1 of translation router **15** can be associated with Fiber Channel, port 2 of translation router **15** can be associated with Transmission Control Protocol/Internet Protocol (TCP/IP), and port 3 of translation router **15** can be associated with an InfiniBand. Thus, translation router **15** is aware of the type of network protocol to which a network packet belongs based on the incoming port number from which the network packet comes. Similarly, translation router **15** is aware of the type of network protocol to which a network packet should be translated based on the outgoing port number to which the network packet is to be transmitted.

Within a network environment, such as network environment **10,** the processing overhead can be relatively high because of the large number of data packets that needed to be dealt with. However, within the network environment, there are also a couple of features that can be used to alleviate the above-mentioned problem. First, although there are numerous network protocols that are being in-use, the total number of different network protocols are relatively small and the specifics of each network protocol are well defined by various governing standards. Second, most network protocols use a header structure ahead of the payload in a packet containing packet description information such as network source and destination addresses, type of packet, etc.

With reference now to Figure **2,** there is illustrated a block diagram of an apparatus for translating data packets from one network protocol to another, in accordance with a preferred embodiment of the present invention. As shown, an apparatus **20** includes a translation template cache **21** and a translation engine **22.** Translation engine **22** is coupled to a general purpose processor **25,** and general purpose processor **25** is coupled to an instruction cache **23,** a data cache **24** and a system memory **26.** Apparatus **20** is preferably located within a translation router, such as translation router **15** from Figure **1.** Translation template cache **21** contains translation templates for facilitating the translation of data packets from one network protocol to another. Basically, each translation template within translation template cache **21** represents a unique network protocol supported by the translation router. The use of translation templates requires far lesser instructions to perform a network protocol translation as compared to using general purpose processor **25.**

Translation engine **22** may be implemented as software, firmware, hardware, or combinations thereof, and is capable of executing operations necessary to manipulate information in packet headers for protocol translations. Translation template cache **21** may be implemented in a dedicated on-chip memory, whether as one or more locked cache lines or a private memory accessible to translation engine **22.**

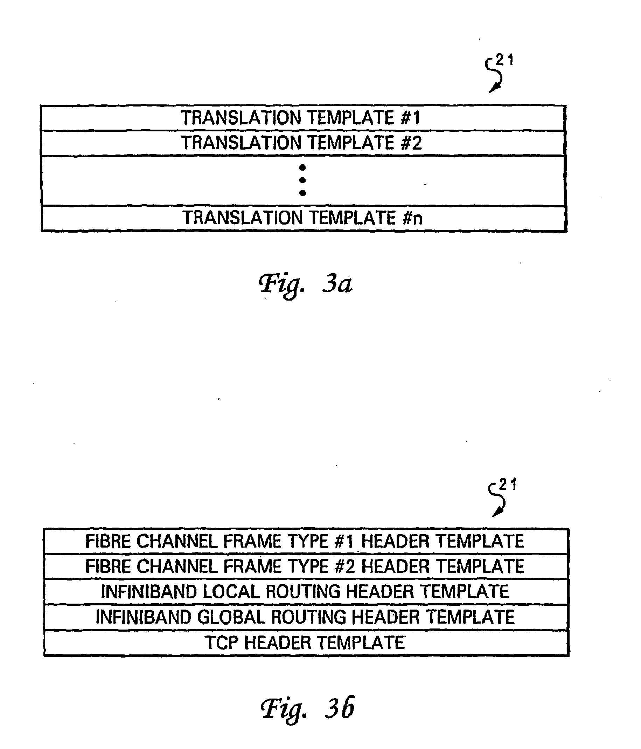

Referring now to Figure **3a,** there is illustrated a block diagram of translation template cache **21,** in accordance with a preferred embodiment of the present invention. As shown, translation template cache **21** contains multiple entries, each entry contains a translation template associated with a network protocol supported by a translation router, such as translation router **15** from Figure **1.** Each translation template is preferably 64 bytes wide, which should be long enough to contain headers of data packets of various network protocols.

A translation template is required for each protocol translation. For example, consider a network A and a network B having a protocol A and a protocol B, respectively. One translation template is required for generating data packets suitable for transmission in network B from data packets received from network A. Another translation template is required to generate data packets suitable for transmission in network A from packets received from network B. If there is a third network C having a network protocol C needed to be supported, four more translation templates must be constructed and loaded into the translation template cache. Basically, two translation templates are required for protocol translations between network A and network C, and two translation templates are required for translations between network B and network C.

Five different translation templates associated with their respective network protocols are shown in Figure **3b.** As shown, entry 1 is a translation template for Fibre Channel frame type #1, entry 2 is a translation template for Fibre Channel frame type #2, entry 3 is a translation template for InfiniBand local routing, entry 4 is a translation template for InfiniBand global routing, and entry 5 is a translation template for TCP/IP.

The details of a translation template can be illustrated with an example. The control and information bits of a typical Fibre Channel frame header include:

D_ID: destination identification (ID)

S_ID: source ID

TYPE: protocol of frame content (e.g., 0000 1000 = SCSI FCP)

F_CTL: flow control

SEQ_ID: sequence ID

DF_CTL: data_field control

SEQ_CNT: sequence count

OX_ID: originator exchange ID

R: responder exchange ID

Parameter: carries information specific to Link_Control frames

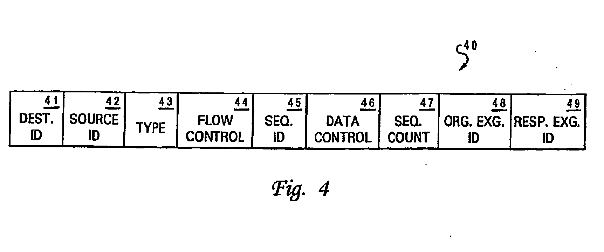

Thus, a translation template for facilitating the translation of a received data packet to a Fibre Channel protocol should include most, if not all, of the above-mentioned control and information bits. With reference now Figure **4,** there is illustrated a block diagram of a translation template for facilitating the translation of a received data packet to a Fibre Channel protocol, in accordance with a preferred embodiment of the present invention. As shown, a translate template **40** includes a destination ID field **41,** a source **ID** field **42,** a type field **43,** a flow control field **44,** a sequence ID field **45,** a data control field **46,** a sequence count field **47,** an originator exchange ID field **48,** and a responder exchanged ID field **49.** As shown, the fields within translation template **40** correspond to the fields within the Fibre Channel frame header.

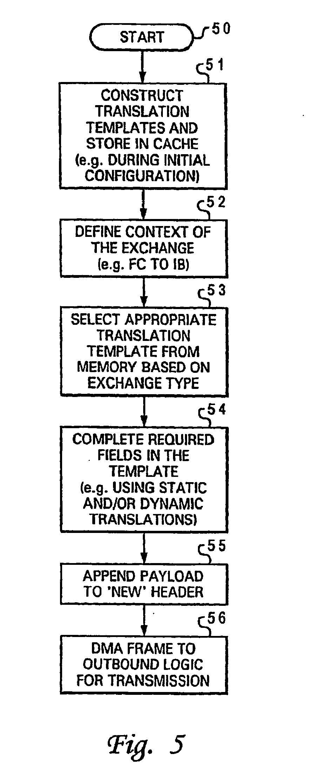

Referring now to Figure **5,** there is depicted a high-level logic flow diagram of a method for translating data packets from one protocol to another by using apparatus **20** from Figure **2,** in accordance with a preferred embodiment of the present invention. Starting at block **30,** a group of translation templates are constructed and the translation templates are loaded into a translation template cache, as shown in block **31.** The translation templates, such as translation template **40** from Figure **4,** are preferably constructed during initial configuration of a system, and the translation templates are then loaded into the translation template cache. Otherwise, the translation templates can be constructed "on-the-fly" as they are being loaded into the translation template cache.

Next, exchange attributes are identified by a translation router, such as translation router **15** from Figure **1**, as depicted in block **32.** At this time, network protocols are also identified, usually as part of the translation engine configuration, and the translation templates are verified as available for use. As mentioned previously, a multi-protocol translation router is capable of identifying the type of network protocol to which a network packet belongs based on the incoming port number the network packet comes from, and is also capable of identifying the type of network protocol to which a network packet should be translated based on the outgoing port number the network packet is to be transmitted.

As each data packet arriving into the translation router, an appropriate translation template is selected from the translation template cache according to the translation context of the data packet by an translation engine, as shown in block **33.**

Appropriate header fields from the data packets from a first network are read and used by the translation engine along with the appropriate translation template in the translation template cache to generate new headers for transmission into a second network, as depicted in block **34.**

The data payload of the data packet from the first network is removed from the header of the data packet, and is then appended to the recently constructed header for the second network, as shown in block **35.** The resultant data packet intended for the second network is then placed into a local memory of the network router.

The data packet intended for the second network is subsequently pulled out of the local memory within the network router. This is usually performed by using a direct memory access (DMA) or by the general-purpose processor, as depicted in block **36.** The data packet intended for the second network is sent to the second network.

As has been described, the present invention pro□vides an improved method and apparatus for translating data packets between different network protocols. Control blocks are constructed in a system memory to facilitate translation from one protocol domain to another. They must be repeatedly accessed as part of the translation process. With the present invention, the control blocks are stored on-chip in a manner that facilitates repeated use over a number of data packets. Further, the on-chip storage is not bound to one protocol format or another. In this way, packets may be translated across such protocols as Fibre Channel, Ethernet and InfiniBand.

It is also important to note that although the present invention has been described in the context of a fully functional translation router, those skilled in the art will appreciate that the mechanisms of the present invention are capable of being distributed as a program product in a variety of forms, and that the present invention applies equally regardless of the particular type of signal bearing media utilized to actually carry out the distribution. Examples of signal bearing media include, without limitation, recordable type media such as floppy disks or CD ROMs and transmission type media such as analog or digital communi□cations links.

## Claims

1. A method for translating data packets from one network protocol to another, said method comprising: constructing (51) a plurality of translation templates, wherein each translation template (40) is dedicated to a translation from one specific network protocol to another specific network protocol; loading said plurality of translation templates into a translation template cache; in response to a data packet from a first network arriving at a translation router, selecting (53) an appropriate one of said plurality of translation templates from said translation template cache according to the translation context of said data packet; generating a new header for transmission into a second network by reading header fields of said data packet from said first network along with said appropriate one of said plurality of translation templates in said translation template cache; removing data payload of said data packet from said first network from its header; appending (55) said data payload of said data packet to said generated header for said second network; and transmitting (56) said data packet to said second network.

2. The method of Claim 1, wherein said plurality of translation templates includes translation templates for Fibre Channel, translation templates for Ethernet and translation templates for InfiniBand.

3. The method of Claim 1, wherein said translation template cache is a dedicated on-chip memory.

4. The method of Claim 1, wherein said selecting further includes selecting an appropriate one of said plurality of translation templates from said translation template cache according to an incoming port number from which said data packet comes.

5. The method of Claim 1, wherein said generating further includes generating a new header for transmission into a second network according to an outgoing port number to which said data packet is to be transmitted.

6. An apparatus for translating data packets from one network protocol to another, said apparatus comprising: means for constructing a plurality of translation templates, wherein each translation template (40) is dedicated to a translation from one specific network protocol to another specific network protocol; means for loading said translation templates into a translation template cache; in response to a data packet from a first network arriving into a translation router, means for selecting (53) an appropriate translation template from said translation template cache according to the translation context of said data packet; means for generating a new header for transmission into a second network by reading header fields of said data packet from said first network along with said appropriate translation template in said translation template cache; means for removing data payload of said data packet from said first network from its header; means for appending (55) said data payload of said data packet to said generated header for said second network; and means for transmitting (56) said data packet to said second network.

7. The apparatus of Claim 6, wherein said wherein said plurality of translation templates includes translation templates for Fibre Channel, translation templates for Ethernet and translation templates for InfiniBand.

8. The apparatus of Claim 6 wherein said translation template cache is a dedicated on-chip memory.

9. The apparatus of Claim 6, wherein said means for selecting further includes means for selecting an appropriate one of said plurality of translation templates from said translation template cache according to an incoming port number from which said data packet comes.

10. The apparatus of Claim 6, wherein said means for generating further includes means for generating a new header for transmission into a second network according to an outgoing port number to which said data packet is to be transmitted.

11. A computer program product residing on a computer usable medium for, when run on a data processing system, instructing the system to carry out the method of any of claims 1 to 5.

## Patentansprüche

1. Verfahren zur Umsetzung von Datenpaketen aus einem Netzwerkprotokoll in ein anderes Netzwerkprotokoll, wobei das Verfahren Folgendes umfasst: Erstellen (51) einer Vielzahl von Umsetzungsschablonen, wobei jede Umsetzungsschablone (40) ausschließlich für eine Umsetzung aus einem ganz bestimmten Netzwerkprotokoll in ein anderes ganz bestimmtes Netzwerkprotokoll vorgesehen ist; Laden der Vielzahl der Umsetzungsschablonen in einen Umsetzungsschablonen-Cachespeicher; als Reaktion darauf, dass ein Datenpaket von einem ersten Netzwerk an einem Umsetzungsrouter ankommt, Auswählen (53) einer geeigneten Umsetzungsschablone der Vielzahl der Umsetzungsschablonen aus dem Umsetzungsschablonen-Cachespeicher entsprechend dem Umsetzungskontext des Datenpakets; Erzeugen eines neuen Kopfbereichs zur Übertragung in ein zweites Netzwerk, indem Felder des Kopfbereichs des Datenpakets von dem ersten Netzwerk zusammen mit der geeigneten Umsetzungsschablone der Vielzahl der Umsetzungsschablonen in dem Umsetzungsschablonen-Cachespeicher gelesen werden; Entfernen der Datennutzlast des Datenpakets von dem ersten Netzwerk aus seinem Kopfbereich; Anfügen (55) der Datennutzlast des Datenpakets an den erzeugten Kopfbereich für das zweite Netzwerk; und Übertragen (56) des Datenpakets an das zweite Netzwerk.

2. Verfahren nach Anspruch 1, wobei die Vielzahl der Umsetzungsschablonen Umsetzungsschablonen für Fibre Channel, Umsetzungsschablonen für Ethernet und Umsetzungsschablonen für InfiniBand beinhaltet.

3. Verfahren nach Anspruch 1, wobei der Umsetzungsschablonen-Cachespeicher ein fest zugeordneter, auf dem Chip befindlicher Speicher ist.

4. Verfahren nach Anspruch 1, wobei der Vorgang des Auswählens des Weiteren das Auswählen einer geeigneten Umsetzungsschablone der Vielzahl der Umsetzungsschablonen aus dem Umsetzungsschablonen-Cachespeicher entsprechend der Nummer eines Eingangsanschlusses, von dem das Datenpaket kommt, beinhaltet.

5. Verfahren nach Anspruch 1, wobei der Vorgang des Erzeugens des Weiteren das Erzeugen eines neuen Kopfbereichs zur Übertragung in ein zweites Netzwerk entsprechend der Nummer eines Ausgangsanschlusses, an den das Datenpaket übertragen werden soll, beinhaltet.

6. Vorrichtung zur Umsetzung von Datenpaketen aus einem Netzwerkprotokoll in ein anderes Netzwerkprotokoll, wobei die Vorrichtung Folgendes umfasst: ein Mittel, um eine Vielzahl von Umsetzungsschablonen zu erstellen, wobei jede Umsetzungsschablone (40) ausschließlich für eine Umsetzung aus einem ganz bestimmten Netzwerkprotokoll in ein anderes ganz bestimmtes Netzwerkprotokoll vorgesehen ist; ein Mittel, um die Umsetzungsschablonen in einen Umsetzungsschablonen-Cachespeicher zu laden; ein Mittel, um als Reaktion darauf, dass ein Datenpaket von einem ersten Netzwerk in einem Umsetzungsrouter ankommt, eine geeignete Umsetzungsschablone aus dem Umsetzungsschablonen-Cachespeicher entsprechend dem Umsetzungskontext des Datenpakets auszuwählen (53); ein Mittel, um einen neuen Kopfbereich zur Übertragung in ein zweites Netzwerk zu erzeugen, indem Felder des Kopfbereichs des Datenpakets von dem ersten Netzwerk zusammen mit der geeigneten Umsetzungsschablone in dem Umsetzungsschablonen-Cachespeicher gelesen werden; ein Mittel, um die Datennutzlast des Datenpakets von dem ersten Netzwerk aus seinem Kopfbereich zu entfernen; ein Mittel, um die Datennutzlast des Datenpakets an den erzeugten Kopfbereich für das zweite Netzwerk anzufügen (55); und ein Mittel, um das Datenpaket an das zweite Netzwerk zu übertragen (56).

7. Vorrichtung nach Anspruch 6, wobei die Vielzahl der Umsetzungsschablonen Umsetzungsschablonen für Fibre Channel, Umsetzungsschablonen für Ethernet und Umsetzungsschablonen für InfiniBand enthält.

8. Vorrichtung nach Anspruch 6, wobei der Umsetzungsschablonen-Cachespeicher ein fest zugeordneter, auf dem Chip befindlicher Speicher ist.

9. Vorrichtung nach Anspruch 6, wobei das Mittel zum Auswählen des Weiteren ein Mittel zum Auswählen einer geeigneten Umsetzungsschablone der Vielzahl der Umsetzungsschablonen aus dem Umsetzungsschablonen-Cachespeicher entsprechend der Nummer eines Eingangsanschlusses, von dem das Datenpaket kommt, enthält.

10. Vorrichtung nach Anspruch 6, wobei das Mittel zum Erzeugen des Weiteren ein Mittel zum Erzeugen eines neuen Kopfbereichs zur Übertragung in ein zweites Netzwerk entsprechend der Nummer eines Ausgangsanschlusses, an den das Datenpaket übertragen werden soll, enthält.

11. Rechnerprogrammprodukt, das sich auf einem rechnerlesbaren Datenträger befindet, um bei seiner Ausführung auf einem Datenverarbeitungssystem das System anzuweisen, das Verfahren nach einem der Ansprüche 1 bis 5 auszuführen.

## Revendications

1. Procédé de traduction de paquets de données d'un protocole de réseau en un autre, ledit procédé comprenant : la construction (51) d'une pluralité de gabarits de traduction, où chaque gabarit de traduction (40) est dédié à une traduction d'un protocole de réseau spécifique en un autre protocole de réseau spécifique, le chargement de ladite pluralité de gabarits de traduction dans une mémoire cache de gabarits de traduction, en réponse au fait qu'un paquet de données provenant d'un premier réseau arrive au niveau d'un routeur de traduction, la sélection (53) d'un gabarit approprié de ladite pluralité de gabarits de traduction à partir de ladite mémoire cache de gabarits de traduction conformément au contexte de traduction dudit paquet de données, la génération d'un nouvel en-tête pour la transmission dans un second réseau en lisant les champs d'en-tête dudit paquet de données provenant dudit premier réseau en même temps que ledit gabarit approprié de ladite pluralité de gabarits de traduction dans ladite mémoire cache de gabarits de traduction, le retrait des données utiles dudit paquet de données provenant dudit premier réseau de son en-tête, l'ajout (55) desdites données utiles dudit paquet de données audit en-tête généré pour ledit second réseau, et la transmission (56) dudit paquet de données audit second réseau.

2. Procédé selon la revendication 1, dans lequel ladite pluralité de gabarits de traduction comprend des gabarits de traduction pour le canal à fibres, des gabarits de traduction pour le réseau Ethernet et des gabarits de traduction pour InfiniBand.

3. Procédé selon la revendication 1, dans lequel ladite mémoire cache de gabarits de traduction est une mémoire sur puce spécialisée.

4. Procédé selon la revendication 1, dans lequel ladite sélection comprend en outre la sélection d'un gabarit approprié de ladite pluralité de gabarits de traduction à partir de ladite mémoire cache de gabarits de traduction en fonction d'un numéro de port d'entrée dont provient ledit paquet de données.

5. Procédé selon la revendication 1, dans lequel ladite génération comprend en outre la génération d'un nouvel en-tête pour une transmission dans un second réseau conformément à un numéro de port de sortie vers lequel ledit paquet de données doit être transmis.

6. Dispositif de traduction de paquets de données d'un protocole de réseau en un autre, ledit dispositif comprenant : un moyen destiné à construire une pluralité de gabarits de traduction, où chaque gabarit de traduction (40) est dédié à une traduction d'un protocole de réseau spécifique en un autre protocole de réseau spécifique, un moyen destiné à charger lesdits gabarits de traduction dans une mémoire cache de gabarits de traduction, en réponse au fait qu'un paquet de données provenant d'un premier réseau arrive dans un routeur de traduction, un moyen destiné à sélectionner (53) un gabarit de traduction approprié à partir de ladite mémoire cache de gabarits de traduction conformément au contexte de traduction dudit paquet de données, un moyen destiné à générer un nouvel en-tête pour une transmission dans un second réseau en lisant les champs d'en-tête dudit paquet de données provenant dudit premier réseau en même temps que ledit gabarit de traduction approprié dans ladite mémoire cache de gabarits de traduction, un moyen destiné à retirer les données utiles dudit paquet de données provenant dudit premier réseau de son en-tête, un moyen destiné à ajouter (55) lesdites données utiles dudit paquet de données audit en-tête généré pour ledit second réseau, et un moyen destiné à transmettre (56) ledit paquet de données audit second réseau.

7. Dispositif selon la revendication 6, dans lequel ladite pluralité de gabarits de traduction comprend des gabarits de traduction pour le canal à fibres, des gabarits de traduction pour le réseau Ethernet et des gabarits de traduction pour InfiniBand.

8. Dispositif selon la revendication 6, dans lequel ladite mémoire cache de gabarits de traduction est une mémoire sur puce spécialisée.

9. Dispositif selon la revendication 6, dans lequel ledit moyen destiné à sélectionner comprend en outre un moyen destiné à sélectionner un gabarit approprié de ladite pluralité de gabarits de traduction à partir de ladite mémoire cache de gabarits de traduction en fonction d'un numéro de port d'entrée dont provient ledit paquet de données.

10. Dispositif selon la revendication 6, dans lequel ledit moyen destiné à générer comprend en outre un moyen destiné à générer un nouvel en-tête pour une transmission dans un second réseau conformément à un numéro de port de sortie auquel ledit paquet de données doit être transmis.

11. Produit de programme informatique résidant sur un support utilisable par un ordinateur destiné, lorsqu'il est exécuté sur un système de traitement de données, à ordonner au système de réaliser le procédé selon l'une quelconque des revendications 1 à 5.
